# EUROPEAN PATENT SPECIFICATION

(11) **EP 2 592 518 B1**
(45) Date of publication and mention of the grant of the patent: **17.10.2018**
(21) Application number: 12190753.9
(22) Date of filing: 31.10.2012
(51) Int. Cl.: G05D 1/02

(54) **Robot cleaner and control method thereof**
Reinigungsroboter und Steuerungsverfahren dafür
Robot nettoyeur et son procédé de commande

(30) Priority: 14.11.2011 KR 20110118445
(43) Date of publication of application: 15.05.2013
(73) Proprietor: Samsung Electronics Co., Ltd., Gyeonggi-do 16677 (KR)
(72) Inventor: Kim, Won Kuk, Seoul (KR); Kim, Shin, Gyeonggi-do (KR); Shin, Dong Min, Gyeonggi-do (KR); Lee, Dong Hun, Gyeonggi-do (KR)
(74) Representative: Taor, Simon Edward William

(56) References cited:
- EP-A2- 1 715 399
- EP-A2- 1 955 632
- EP-A2- 1 977 673
- US-A1- 2011 098 853

## Description

One or more embodiments relate to a robot cleaner that performs efficient cleaning and a control method thereof.

A robot cleaner is an apparatus that cleans a cleaning region of a predetermined size, such as a house or an office, while traveling in the cleaning region. The robot cleaner may include a driving device to drive the robot cleaner, an obstacle sensor to sense an obstacle, a battery to supply power to the robot cleaner, and a microprocessor to control overall operation of the robot cleaner in addition to a vacuum cleaner unit to suction dust or foreign matter.

The robot cleaner with the above-stated construction determines the distance from various obstacles installed in a cleaning region and performs cleaning while travelling so as not to collide with such obstacles using the determined information. In order to completely perform cleaning, the robot cleaner is designed to recognize the cleaning region and to distinguish between a region which has been cleaned and a region which has not been cleaned.

Cleaning modes of the robot cleaner may include an automatic mode and a repetition mode. The automatic mode is a mode in which the robot cleaner cleans the entire cleaning region while moving along a predetermined travel path. The repetition mode is a mode in which cleaning according to the automatic mode is repeated.

In the repetition mode, however, cleaning according to the automatic mode is merely repeated. When position information of the robot cleaner, traveling along the predetermined travel path, is inaccurate, therefore, a region which has already been cleaned may be cleaned again, or a region which has not yet been cleaned may not be cleaned. Also, if the movement of the robot cleaner is not traced, it may be difficult to know which region the robot cleaner has cleaned and which region the robot cleaner has not cleaned.

EP 1715399 A2 discloses a robot cleaner driving method, comprising one or more setting steps of setting an imaginary space, including a space to be cleaned, and partitioning the imaginary space into one or more cells, one or more cleaning steps, which are assigned to the respective cells, of driving the robot cleaner to clean the assigned cells , and one or more turning steps, which are performed after the respective cleaning steps or the respective setting steps are completed, such that the imaginary space is cleaned in the direction of a spiral on a per cell basis.

US 2011/0098853 discloses a method for controlling a robot cleaner including detecting a cleaning target space, setting a cleaning region within the detected cleaning space and cleaning the set cleaning region; if the set cleaning region is completely cleaned, moving to a not-yet-cleaned region adjacent to a cleaning completion spot of the cleaning region; and setting a new cleaning region in the not-yet-cleaned region and performing cleaning.

EP 1977673 A2 discloses a robot cleaner that can uniformly clean a cleaning region based on a wall-following technique which allows the robot cleaner to travel along the outline of the cleaning region.

The foregoing described problems may be overcome and/or other aspects may be achieved by one or more embodiments of a robot cleaner that improves cleaning efficiency and a control method thereof.

Additional aspects and/or advantages of one or more embodiments will be set forth in part in the description which follows and, in part, will be apparent from the description, or may be learned by practice of one or more embodiments of disclosure. One or more embodiments are inclusive of such additional aspects.

According to an aspect of the invention, there is provided a control method of a robot cleaner as set out in claim 1. Optional features of this aspect are set out in claims 2 to 5.

According to another aspect of the invention, there is provided a robot cleaner as set out in 6. Optional features of this aspect are set out in claims 7 to 11.

These and/or other aspects of the invention will become apparent and more readily appreciated from the following description of the embodiments, taken in conjunction with the accompanying drawings of which:
FIG. 1 is a perspective view showing the external appearance of a robot cleaner according to one or more embodiments;
FIG. 2 is a bottom view of a robot cleaner according to one or more embodiments;
FIG. 3 is a block diagram showing the construction of a robot cleaner according to one or more embodiments;
FIG. 4 is a view illustrating a method of extracting feature points from a ceiling image according to one or more embodiments;
FIG. 5 is a view illustrating a feature map prepared by a robot cleaner according to one or more embodiments;
FIG. 6 is a view illustrating contour travel in a cleaning region according to one or more embodiments;
FIG. 7 is a view illustrating the order of movement between cleaning regions according to one or more embodiments;
FIGS. 8 and 9 are views illustrating a process of resetting a cleaning region and cleaning direction based on a reference wall detected at a cleaning region according to one or more embodiments;
FIG. 10 is a view illustrating a travel path of the robot cleaner in a cleaning region according to one or more embodiments;
FIG. 11 is a view illustrating a method of the robot cleaner evading an obstacle in a case in which the obstacle is present in a cleaning region according to one or more embodiments;
FIG. 12 is a flowchart showing an operation process of the robot cleaner according to one or more embodiments;
FIG. 13 is a flowchart showing an operation of cleaning in each cleaning region according to one or more embodiments;
FIG. 14 is a flowchart showing an operation of contour travel in a cleaning region according to one or more embodiments; and
FIG. 15 is a flowchart showing an operation of performing cleaning in a cleaning region in which a virtual wall is set according to one or more embodiments.

Reference will now be made in detail to one or more embodiments, illustrated in the accompanying drawings, wherein like reference numerals refer to like elements throughout. In this regard, embodiments of the present invention may be embodied in many different forms and should not be construed as being limited to embodiments set forth herein, as various changes, modifications, and equivalents of the systems, apparatuses and/or methods described herein will be understood to be included in the invention by those of ordinary skill in the art after embodiments discussed herein are understood. Accordingly, embodiments are merely described below, by referring to the figures, to explain aspects of the present invention.

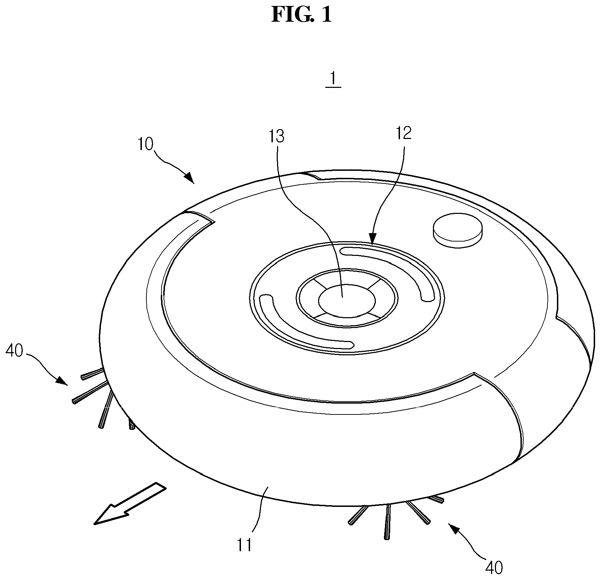

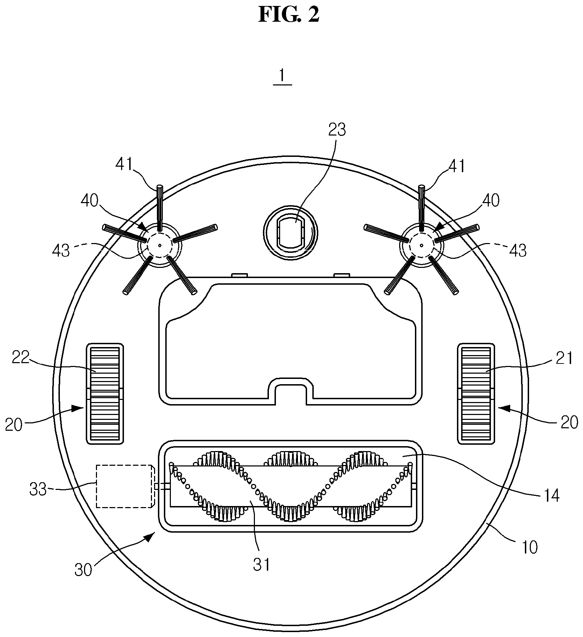

FIG. 1 is a perspective view showing the external appearance of a robot cleaner according to one or more embodiments, and FIG. 2 is a bottom view of a robot cleaner according to one or more embodiments.

A robot cleaner 1 may include, for example, a main body 10 forming the external appearance of the robot cleaner 1, a driving device 20 installed at the bottom of the main body 10 to move the robot cleaner 1, and brush devices 30 and 40 to sweep or scatter dust on a floor on which the robot cleaner 1 travels to clean the floor.

The main body 10 may further include a contact sensor or a proximity sensor to sense an obstacle. For example, an optical sensor may be installed in a bumper 11 installed at the front of the main body 10 to sense an obstacle, and an infrared sensor (or an ultrasonic sensor) may be installed at the bottom of the main body 10 to an obstacle, such as a stair. Also, a vision sensor 13 may be installed, for example, at the top of the main body 10 to capture a surrounding environment.

The main body 10 may be provided with a display 12 to inform a user of information regarding a state or operation of the robot cleaner 1.

The driving device 20 may include a pair of driving wheels 21 and 22 installed, for example, at opposite sides of the middle of the main body 10 to adjust movement of the robot cleaner 1 and a caster wheel 23 rotatably installed, for example, at the front of the main body 10 so that an angle of the caster wheel 23 may be changed depending upon the state of a floor on which the robot cleaner 1 moves. The caster wheel 23 may be used to stabilize the pose of the robot cleaner 1 and prevent falling of the robot cleaner 1. The caster wheel 23 may be a roller or caster-shaped wheel.

The driving wheels 21 and 22 may be driven forward or backward to move the robot cleaner 1. The driving wheels 21 and 22 may be driven forward or backward to move the robot cleaner 1 forward or backward. While the left driving wheel 22 is driven backward, the right driving wheel 21 may be driven forward to rotate the robot cleaner left on the basis of the front. On the other hand, while the right driving wheel 21 is driven backward, the left driving wheel 22 may be driven forward to rotate the robot cleaner right on the basis of the front.

The brush devices 30 and 40 may include a main brush device 30 provided adjacent to an suction port 14 formed at the bottom of the main body 10 to sweep or scatter dust on a floor, thereby improving dust suction efficiency, and side brush devices 40 installed at opposite sides of the front of the main body 10 to sweep dust on the floor, on which the robot cleaner 1 travels, to the suction port 14.

The main brush device 30 may include a drum type rotary brush (hereinafter, referred to as a main brush), having a length corresponding to the suction port 14, for example, disposed, for example, adjacent to the suction port 14 in parallel to the suction port 14 to be rotated with respect to the floor in a roller fashion to sweep or scatter dust on the floor and a main brush motor 33 to rotate the main brush 31.

Also, the robot cleaner 1 may include a dust collection device to suction and collect foreign matter, such as dust.

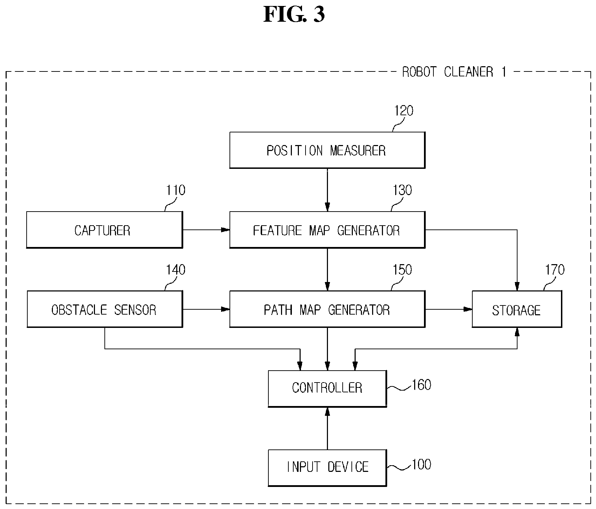

FIG. 3 is a block diagram showing the construction of a robot cleaner according to one or more embodiments.

As shown in FIG. 3, the robot cleaner 1 may include, for example, an input device 100, a capturer 110, a position measurer 120, a feature map generator 130, an obstacle sensor 140, a path map generator 150, a controller 160, and storage 170.

The input device100 may allow a user to input a command regarding cleaning modes. The cleaning modes may include, for example, an automatic mode and a repetition mode.

The automatic mode may be a mode to set a cleaning path in the entire cleaning region and to perform cleaning along the set cleaning path. Here, the entire cleaning region may mean a real space, in which the robot cleaner 1 is located, and thus the entirety of a space including an obstacle, with respect to which cleaning is not performed. When cleaning is performed with respect to the entire cleaning region in the automatic mode, the robot cleaner 1 may perform a stop operation to change a travel direction thereof. The repetition mode may be a mode to define a plurality of cleaning regions within the entire cleaning region based on the position of the robot cleaner 1 and to sequentially perform cleaning in the defined cleaning regions. Here, a cleaning region may be a virtual space defined by the robot cleaner 1. Information regarding the cleaning regions may be previously designated and stored in the robot cleaner 1. For example, each cleaning region may be set as a rectangle having a length and width, and having the same size d, based on the center of the robot cleaner 1. The size of each cleaning region may be variously changed. After defining a plurality of cleaning regions based on the present position of the robot cleaner 1, the robot cleaner 1 may clean the respective cleaning regions while moving to the respective cleaning regions along a predetermined travel path. At this time, the travel path may be, for example, a zigzag travel path, which may be pre-stored in the robot cleaner 1.

The capturer 110 may capture an image of the surrounding area to extract feature points. The surrounding area image may include a ceiling, wall, and floor. The ceiling, an image of which is less changed, may be properly used as such a surrounding area image, for example. Hereinafter, as only an example, the ceiling will be used as the surrounding area image.

The capturer 110 may be realized by a charge coupled device (CCD), complementary metal oxide semiconductor (CMOS), or another image acquisition device. The capturer 110 may be realized by an analog-to-digital converter (ADC) to convert an analog signal of an acquired image into a digital signal.

The position measurer 120 may be realized by, for example, a relative position recognition module, such as an encoder, a gyro sensor, or an acceleration sensor, to measure the position of the robot cleaner 1. The encoder may be connected to the driving wheels 21 and 22 to sense rotational speed of the driving wheels 21 and 22. The rotational speed sensed by the encoder may be integrated to determine the position (or movement distance) and heading of the robot cleaner 1. The gyro sensor may measure the heading of the robot cleaner 1 using rotational inertia. The acceleration sensor may dually integrate motion acceleration of the robot cleaner 1 to measure the position of the robot cleaner 1.

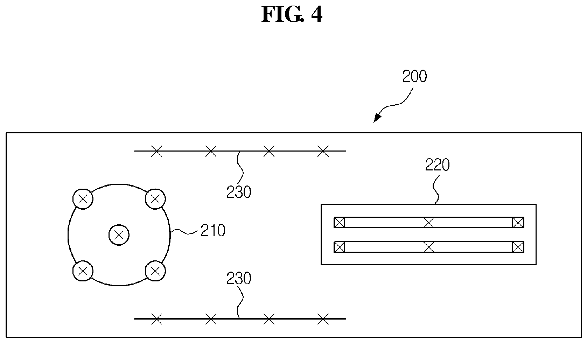

The feature map generator 130 may extract a plurality of feature points from a ceiling image acquired by the capturer 110 to generate a feature map. The feature map may include feature points uniformly measured in the surrounding environment. Here, the feature points may be points exhibiting inherent features of specific positions. Hereinafter, extraction of the feature points will be described in more detail with reference to FIG. 4.

FIG. 4 is a view illustrating a method of extracting feature points from a ceiling image according to one or more embodiments.

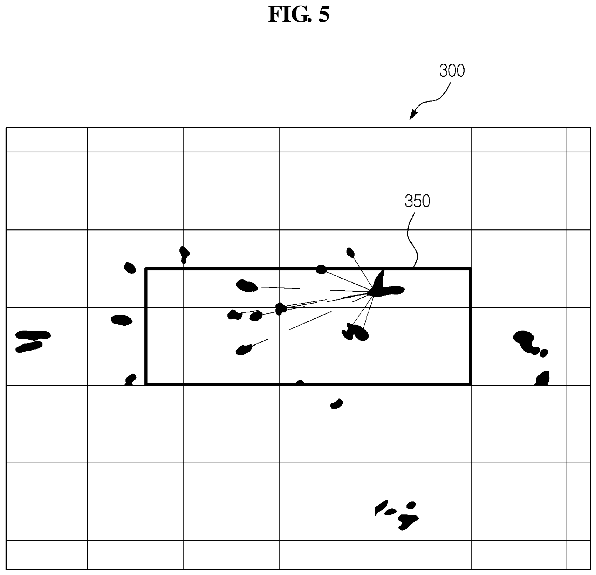

Referring to FIG. 4, a ceiling image 200 may include, for example, sub-images of a chandelier 210, a fluorescent lamp 220, and a corner 230, which are distinguished from other positions. After feature points are marked at such sub-images, the robot cleaner 1 may find the same feature points as the marked feature points from a captured image during movement to determine the pose (position and heading) of the robot cleaner 1. FIG. 5 is a view illustrating a feature map prepared by a robot cleaner according to one or more embodiments.

A feature map 300 may include various forms of feature points. Feature points locally adjacent to each other may be connected to each other. If the robot cleaner 1 finds a combination of predefined feature points from a captured image 350, the position and heading of the robot cleaner 1 may be determined. Meanwhile, examples of an algorithm to extract such feature points may include scale invariant feature transform (SIFT), descriptor, and Harris corner detector. To prepare a feature map, a simultaneous localization and mapping (SLAM) method, such as a range finder, using radio frequency identification (RFID) and structure light, for example, may be applied in addition to image capturing. Here, SLAM is an algorithm to simultaneously recognize the position of the robot cleaner 1 and generate a map of the robot cleaner 1.

Referring back to FIG. 3, the feature map generator 130 may complete a feature map in which the feature points obtained from the ceiling image may correspond to the positions measured by the position measurer 120. After completing the feature map, the feature points obtained from the ceiling image may be compared with the feature map to determine the position and heading of the robot cleaner 1.

The storage 170 may store the feature map generated by the feature map generator 130. In addition, the storage 170 may store information regarding the cleaning modes, such as the automatic mode and the repetition mode, of the robot cleaner 1 and an algorithm or data to control the operation of the robot cleaner 1 according to each cleaning mode. Also, the storage 170 may store a cleaning information map. The cleaning information map, in which cleaning completion information may be recorded, may be generated while the robot cleaner 1 travels along a predetermined travel path to perform cleaning. The storage 170 may be realized, for example, by a non-volatile memory device, such as a ROM, PROM, EPROM, and flash memory, a volatile memory device, such as a RAM, or a storage medium, such as a hard disk and an optical disk; however, the storage 170 is not limited thereto. The storage 170 may be realized in another well-known arbitrary form.

The obstacle sensor 140 may sense an obstacle approaching the robot cleaner 1 during movement of the robot cleaner 1. As an example, the obstacle sensor 140 may include an ultrasonic sensor. In this case, the ultrasonic sensor may transmit ultrasonic waves in the direction in which the robot cleaner 1 is travelling and receive reflected ultrasonic waves to sense an obstacle. As another example, the obstacle sensor 140 may include an infrared emitting device and an infrared receiving device. In this case, the infrared emitting device may emit infrared light, and the infrared receiving device may receive reflected infrared light to sense an obstacle.

The path map generator 150 may store position data obtained by the robot cleaner 1 while the robot cleaner 1 moves along a wall (or obstacle) and may generate a cleaning path map based on the stored position data. The robot cleaner 1 may perform cleaning while moving along a predetermined travel path in the entire cleaning region with reference to the cleaning path map.

When a user selects a cleaning mode through the input device 100, the controller 160 may control the robot cleaner 1 to perform cleaning according to the selected cleaning mode. As previously described, the cleaning mode may be an automatic mode or a repetition mode.

When the user selects the automatic mode, the controller 160 may control the operation of the robot cleaner 1 to perform cleaning while moving along a predetermined travel path in the entire cleaning region. For example, the predetermined travel path may be a zigzag travel path. The zigzag travel path is well known, and therefore, a detailed description thereof will be omitted.

When the user selects the repetition mode, the controller 160 may control the operation of the robot cleaner 1 to perform cleaning according to the repetition mode. When the repetition mode is executed, the controller 160 may define a plurality of cleaning regions based on the present position of the robot cleaner 1, and the robot cleaner 1 may travel along the contour of one of the defined cleaning regions in which the robot cleaner 1 is located. When a reference wall is detected as the result of the contour travel, the controller 160 may redefine a cleaning region and cleaning direction based on the detected reference wall, and the robot cleaner 1 may perform cleaning while moving along a predetermined travel path in the redefined cleaning region.

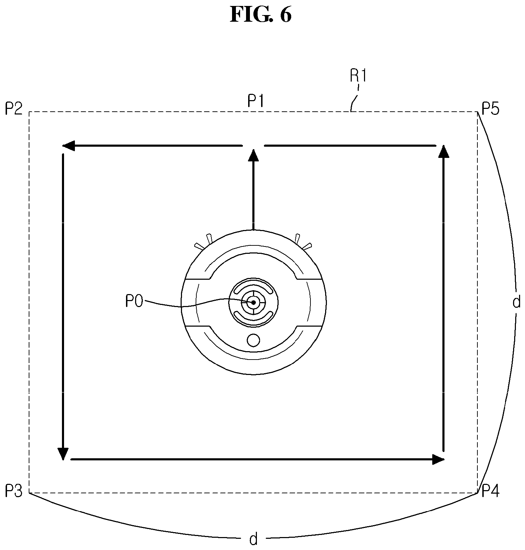

FIG. 6 is a view illustrating contour travel in a cleaning region defined by the robot cleaner 1 according to one or more embodiments.

When a repetition mode is executed, the controller 160 may predefine a plurality of cleaning regions with respect to the entire cleaning region based on the present position of the robot cleaner 1. Here, a cleaning region may be a virtual space set based on the center of the robot cleaner 1. For example, a cleaning region may be defined as a rectangle having a length and width, which have the same size d. Since the cleaning region may be formed based on the center P0 of the robot cleaner 1, the center of the cleaning region may coincide with the center P0 of the robot cleaner 1. Hereinafter, one of the cleaning regions defined by the robot cleaner 1 in which the robot cleaner 1 is located when the repetition mode is executed will be referred to as a first cleaning region.

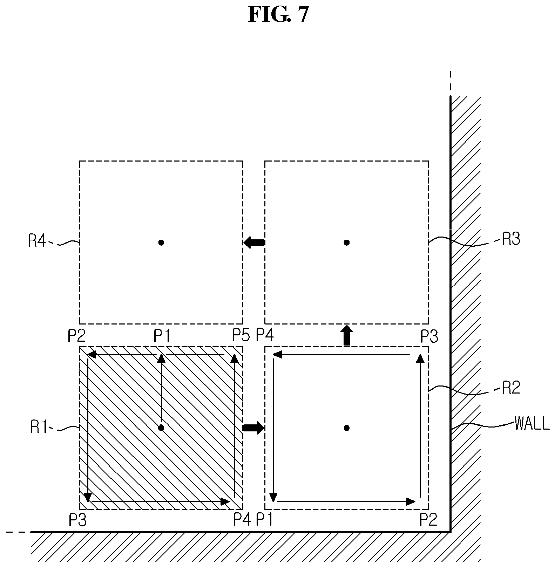

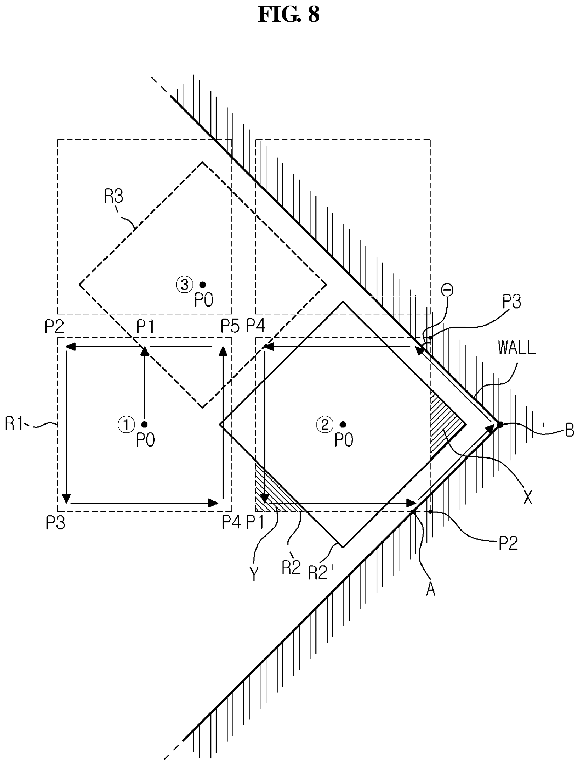

When a first cleaning region R1 is set as shown in FIG. 6, the controller 160 may control the robot cleaner 1 to travel along the contour of the first cleaning region R1. Hereinafter, travel of the robot cleaner 1 along the contour of the first cleaning region R1 will be referred to as contour travel. For example, the controller 160 may control the robot cleaner 1 to perform the contour travel in order of P0, which is the initial position, P1, P2, P3, P4, P5, and P1.
When the contour travel is completed, the controller 160 may control the robot cleaner 1 to perform cleaning while moving in the first cleaning region R1.
When cleaning of the first cleaning region R1 is completed, the controller 160 may control the robot cleaner 1 to move to the next position, i.e. a second cleaning region R2.
When the robot cleaner 1 moves from the first cleaning region R1 to the next position, i.e. the second cleaning region R2, the controller 160 may control the robot cleaner 1 to move in a zigzag pattern as shown in FIG. 7. Also, the controller 160 may control the robot cleaner 1 to move to a point of the contour of the second cleaning region R2 nearest a point at which cleaning of the first cleaning region R1 is completed (hereinafter, referred to as a cleaning completion point). Specifically, in FIG. 7, if the cleaning completion point of the first cleaning region R1 is P4, a point of the contour of the second cleaning region R2 which is nearest the cleaning completion point P4 of the first cleaning region R1 is P1. Consequently, the controller 160 may control the robot cleaner 1 to move to the point P1 of the second cleaning region R2.
After the robot cleaner 1 moves to the point P1 of the second cleaning region R2, the controller 160 may control the robot cleaner 1 to travel along the contour of the second cleaning region R2 from the point P1 in a direction indicated by arrows. At this time, if the contour of the second cleaning region R2 corresponds to a wall as shown in FIG. 7, the robot cleaner 1 may travel along the contour of the second cleaning region R2.
As shown in FIG. 8, however, the contour of the second cleaning region R2 may not correspond to the wall. In this case, the robot cleaner 1 may not travel along the contour of the second cleaning region R2 but may travel along the wall. In other words, when the robot cleaner 1 encounters the wall while traveling along the contour of the second cleaning region R2, the robot cleaner 1 may not travel along the contour of the second cleaning region R2 but may travel along the wall. When the robot cleaner 1 encounters an obstacle, such as a wall during contour travel, as described above, the robot cleaner 1 may rotate by an angle between the border of the second cleaning region R2 and the wall and then may move along the wall. When the robot cleaner 1 rotates while moving along the wall, the controller 160 may store data regarding the rotation angle and travel distance after rotation in the storage 170.
After the contour travel in the second cleaning region R2 is completed, the controller 160 may analyze the data stored in the storage 170 to detect a reference wall. Specifically, when the robot cleaner 1 rotates while moving along the wall, if the rotation angle of the robot cleaner 1 is less than a reference angle, and the movement distance of the robot cleaner 1 along the wall after rotation is greater than a reference distance, the controller 160 may recognize the wall as a reference wall. The reference angle and the reference distance may be set as described above in order to exclude a wall which is not suitable for the reference wall. Specifically, if the rotation angle of the robot cleaner 1 during movement along the wall is equal to or greater than the reference angle or the movement distance of the robot cleaner 1 after rotation is equal to or less than the reference distance, it may mean that the robot cleaner 1 moves along an uneven wall. However, such an uneven wall is not suitable for the reference wall, and therefore, it may be necessary to set the reference angle and the reference distance in order to exclude such a case.

When the reference wall is detected as the result of the contour travel in the second cleaning region R2, the controller 160 may redefine the second cleaning region R2 and cleaning direction based on the reference wall. Specifically, in FIG. 8, when a segment interconnecting a point A and a point B is set as the reference wall, a second cleaning region R2' redefined by the controller 160 may be a region obtained by rotating the second cleaning region R2 by a rotation angle θ of the robot cleaner 1. When the second cleaning region R2 is redefined as described above, the cleaning direction of the robot cleaner 1 may be different from that of the robot cleaner 1 in the first cleaning region R2.

When the second cleaning region R2 is redefined, the next cleaning region, i.e. a third cleaning region, to which the robot cleaner 1 moves, follows the cleaning direction of the redefined second cleaning region R2'. As shown in FIG. 8, a third cleaning region R3 may be parallel to the redefined second cleaning region R2'.

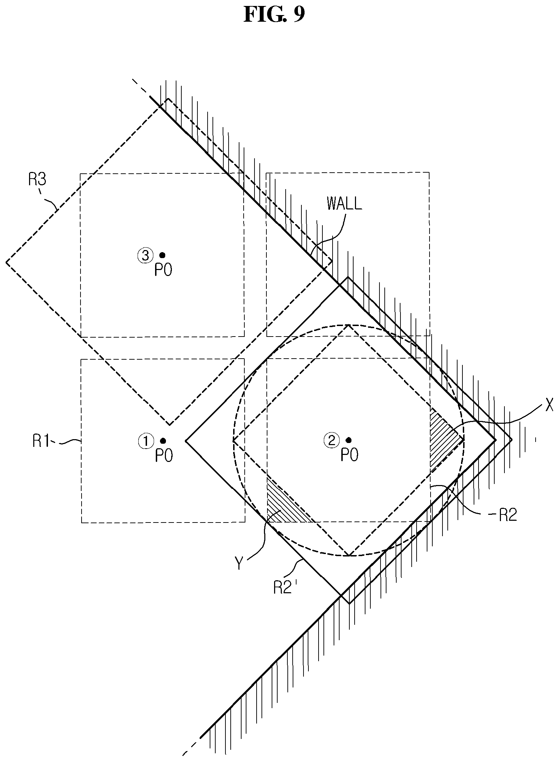

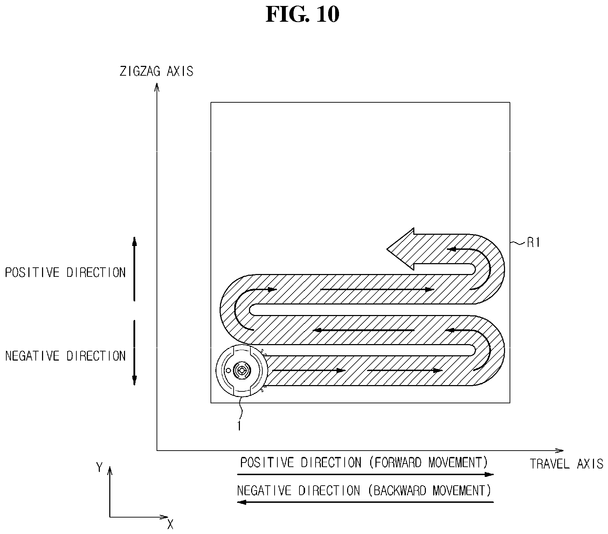

Meanwhile, when the second cleaning region R2 is redefined as shown in FIG. 8, a hatched portion X may be cleaned as compared with a case in which the second cleaning region R2 is not redefined. Since the redefined second cleaning region R2' is rotated from the second cleaning region R2 by θ, however, a reversely hatched portion Y may not be cleaned. In order to prevent occurrence of a region that is not cleaned, the controller 160 may rotate the second cleaning region R2 by θ, enlarge the rotated region, and redefine the enlarged region as a second cleaning region. For example, as shown in FIG. 9, a circle may be circumscribed about a square obtained by rotating the second cleaning region R2 by θ, and a circumscribed square R2' having a figure similar to that of the rotated square may be redefined as a second cleaning region. In this case, the redefined second cleaning region R2' may include a reversely hatched portion Y. When the cleaning region is redefined using the above method, the robot cleaner 1 may set a virtual wall along the border of the redefined cleaning region, and may perform cleaning while moving in the cleaning region having the set virtual wall along a predetermined travel path. For example, the robot cleaner 1 may clean the cleaning region while moving along a zigzag travel path, which will be described in more detail with reference to FIG. 10.

FIG. 10 is a view illustrating a travel path of the robot cleaner 1 in a cleaning region (or a redefined cleaning region) according to one or more embodiments.

As shown in FIG. 10, a predefined cleaning region R1 may be present on a plane including a travel axis and a zigzag axis. Here, the travel axis may indicate an axis parallel to a travel direction of the robot cleaner 1. A positive direction of the travel axis may indicate a forward movement direction of the robot cleaner 1, and a negative direction of the travel axis may indicate a backward movement direction of the robot cleaner 1. The zigzag axis may indicate an axis perpendicular to the travel axis, i.e. an axis along which the robot cleaner 1 rotates to change direction. A positive direction of the zigzag axis may indicate a left direction of the robot cleaner 1, and a negative direction of the zigzag axis may indicate a right direction of the robot cleaner 1.

After the cleaning region R1 is defined, the robot cleaner 1 may perform cleaning while moving forward along the travel axis. When direction change is required after cleaning along the travel axis is completed, the robot cleaner 1 may travel in a curved fashion to change the travel direction by 180 degrees. When cleaning along the zigzag axis is completed after the travel direction is changed, and direction change is required, the robot cleaner 1 may travel in a curved fashion to change the travel direction by 180 degrees. Subsequently, the robot cleaner 1 may perform cleaning while moving along the travel axis. As the robot cleaner 1 travels in a curved fashion to change the travel direction as described above, the number of stop operations for direction change may be reduced, thereby possibly reducing cleaning time. Specifically, for non-curved travel, the robot cleaner 1 may perform movement along the travel axis -> stop -> change of travel direction to the zigzag axis -> movement along the zigzag axis -> stop - > change of travel direction to the travel axis -> movement along the travel axis. For curved travel, on the other hand, the robot cleaner 1 may perform only movement along the travel axis -> curved travel to change the travel direction by 180 degrees.

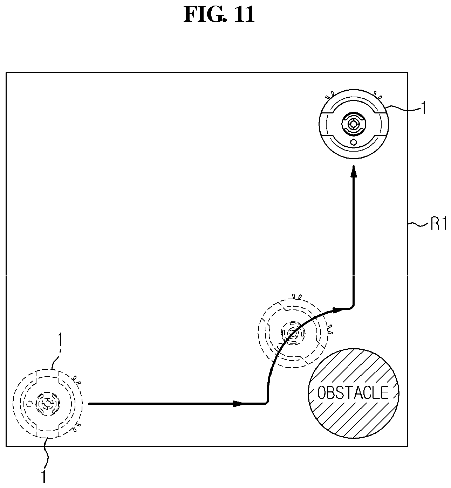

Consequently, cleaning time may be reduced as compared with the non-curved travel. If an obstacle is sensed while the robot cleaner 1 may travel in a curved fashion to change the travel direction, however, the robot cleaner 1 may estimate the obstacle using a wall following method to travel as shown in FIG. 11.

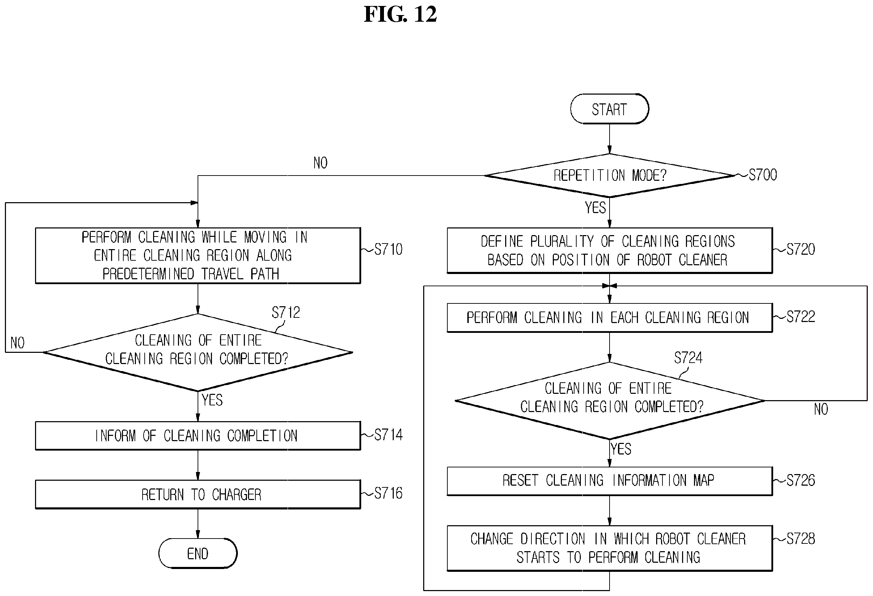

FIG. 12 is a flowchart showing an operation process of the robot cleaner according to one or more embodiments.

First, the robot cleaner 1 may determine whether the repetition mode, which is one of the cleaning modes, has been selected (S700).

Upon determining at Operation S700 that the repetition mode has not been selected, i.e. the automatic mode has been selected (S700, No), the robot cleaner 1 may perform cleaning while moving in the entire cleaning region along a predetermined travel path (S710). The predetermined travel path may be, for example a zigzag travel path. In this way, the robot cleaner 1 may clean the entire cleaning region while moving along the predetermined travel path. Alternatively, the robot cleaner 1 may create a travel path having another pattern and may clean the entire cleaning region while moving along the created travel path.

Subsequently, the robot cleaner 1 may determine whether cleaning of the entire cleaning region has been completed (S712).

Upon determining at Operation S712 that cleaning of the entire cleaning region has not been completed (S712, No), the robot cleaner 1 may continue to clean the entire cleaning region (S710).

Upon determining at Operation S712 that cleaning of the entire cleaning region has been completed (S712, Yes), the robot cleaner 1 may inform a user that cleaning in the automatic mode has been completed (S714). At this time, the completion of cleaning may be indicated, for example, through sound or text.

Subsequently, the robot cleaner 1 may return to a charger (not shown), which charges the robot cleaner 1 (S716).

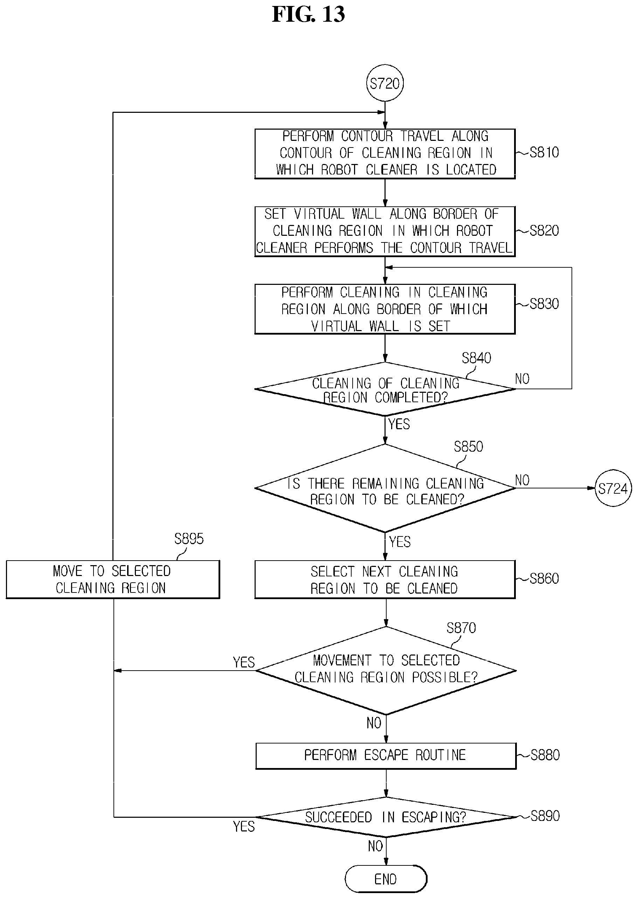

Upon determining at Operation S700 that the repetition mode has been selected, the robot cleaner 1 may define a plurality of cleaning regions based on the position of the robot cleaner 1 (S720) and may perform cleaning in each of the defined cleaning regions (S722). Operation S722 to perform cleaning in each of the defined cleaning regions will be described in more detail below with reference to FIG. 13. Subsequently, the robot cleaner 1 may determine whether cleaning of the entire cleaning region has been completed (S724).

Upon determining at Operation S724 that cleaning of the entire cleaning region has not been completed, the robot cleaner 1 may continue to clean the defined cleaning regions (S722).

Upon determining at Operation S724 that cleaning of the entire cleaning region has been completed, the robot cleaner 1 may reset a cleaning information map created during cleaning of the defined cleaning regions (S726). At this time, only information regarding cleaning completion of the respective cleaning regions may be reset, and information regarding the defined cleaning regions may be maintained.

After the cleaning information map is reset, the robot cleaner 1 may change a direction in which the robot cleaner starts to perform cleaning (S728) and may start to perform cleaning with a cleaning region corresponding to the cleaning completion position. For example, in FIG. 10, it may be assumed that when the robot cleaner 1 starts to perform cleaning of a cleaning region in which the robot cleaner 1 is located at Operation S722, the cleaning may be started from a positive direction of an X axis. Then, when the robot cleaner 1 starts to perform cleaning of a cleaning region corresponding to the cleaning completion position, the cleaning may be started from a positive direction of a Y axis. In this way, the cleaning direction may be changed when the cleaning process for each cleaning region is repeated, thereby possibly reducing regions in which cleaning is repeated and possibly reducing regions in which cleaning is not performed. FIG. 13 is a flowchart showing an operation to perform cleaning in each cleaning region according to one or more embodiments in more detail.

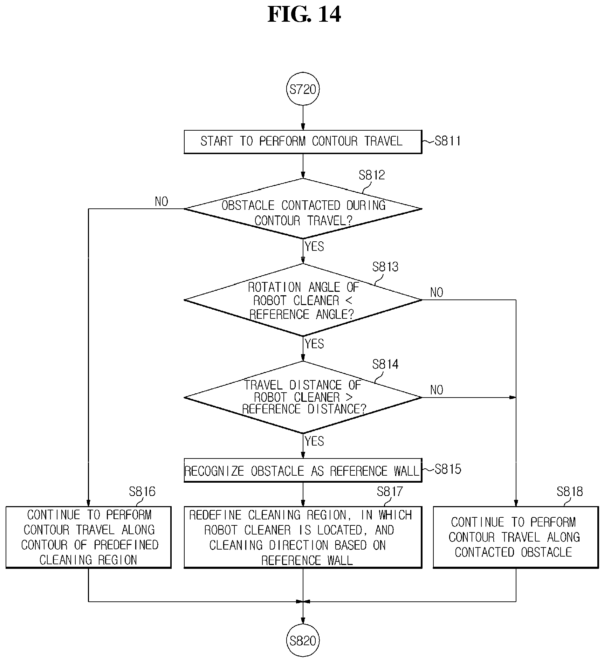

First, the robot cleaner 1 may perform contour travel along the contour of a cleaning region in which the robot cleaner 1 is located (S810). Operation S810 will be described in more detail below with reference to FIG. 14.

Subsequently, the robot cleaner 1 may set a virtual wall along the border of the cleaning region in which the robot cleaner 1 may perform the contour travel (S820).

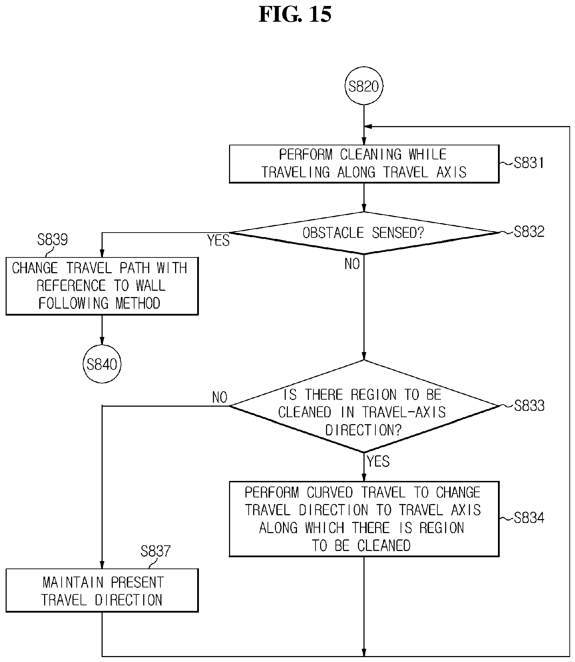

When the virtual wall has been set, the robot cleaner 1 may perform cleaning in the cleaning region along the border of which the virtual wall may be set (S830). Operation S830 will be described in more detail below with reference to FIG. 15.

Subsequently, the robot cleaner 1 may determine whether cleaning of the corresponding cleaning region has been completed (S840).

Upon determining at Operation S840 that cleaning of the corresponding cleaning region has not been completed (S840, No), the robot cleaner 1 may continue to clean the corresponding cleaning region (S830).

Upon determining at Operation S840 that cleaning of the corresponding cleaning region has been completed (S840, Yes), the robot cleaner 1 may determine whether there is a remaining cleaning region to be cleaned (S850).

Upon determining at Operation S850 that there is a remaining cleaning region to be cleaned (S850, Yes), the robot cleaner 1 may select the next cleaning region to be cleaned (S860).

After the next cleaning region to be cleaned has been selected, the robot cleaner 1 may determine whether the robot cleaner can move to the selected cleaning region (S870). That is, the robot cleaner 1 may determine whether an obstacle is present on a path along which the robot cleaner 1 moves to the selected cleaning region or whether the present position of the robot cleaner 1 is blocked by the obstacle.

Upon determining at Operation S870 that the robot cleaner can move to the selected cleaning region (S870, Yes), the robot cleaner 1 may move to the selected cleaning region (S895). When the robot cleaner 1 encounters an obstacle before the robot cleaner 1 moves to the selected cleaning region, the robot cleaner 1 may regard the distance between the center of the robot cleaner 1 and the target point as a segment and may travel while evading the obstacle. When the heading of the robot cleaner 1 is directed to the target point, the robot cleaner 1 may move to the selected cleaning region. After the robot cleaner 1 moves to the selected cleaning region, the robot cleaner 1 may repeat the operation of performing contour travel in the corresponding cleaning region (S810) and the operation of setting the virtual wall along the border of the cleaning region in which the robot cleaner 1 performs the contour travel (S820). Upon determining at Operation S870 that the robot cleaner cannot move to the selected cleaning region (S870, No), the robot cleaner 1 may perform an escape routine (S880). The escape routine may be performed when an obstacle is present in the vicinity of the robot cleaner 1 or in the vicinity of the selected cleaning region with the result that the robot cleaner cannot move to the selected cleaning region.
After the escape routine is performed, the robot cleaner 1 may determine whether or not the robot cleaner 1 has succeeded in escaping (S890). Upon determining that the robot cleaner 1 has succeeded in escaping (S890, Yes), the robot cleaner 1 may move to the selected cleaning region (S895). After the robot cleaner 1 has moved to the selected cleaning region, the robot cleaner 1 may repeat the operation of performing contour travel in the corresponding cleaning region (S810) and the operation of setting the virtual wall along the border of the cleaning region in which the robot cleaner 1 performs the contour travel (S820).

On the other hand, upon determining that the robot cleaner 1 has not succeeded in escaping (S890, No), the robot cleaner 1 may determine that further cleaning is not possible and finish the cleaning operation.

FIG. 14 is a flowchart showing an operation of performing contour travel along the contour of the cleaning region according to one or more embodiments, in more detail. The robot cleaner 1 may start to perform contour travel along the border of a predefined cleaning region (S811). For example, the robot cleaner 1 may perform contour travel in directions as indicated by arrows as shown in FIG. 8.

Subsequently, the robot cleaner 1 may determine whether the robot cleaner has contacted an obstacle during contour travel (S812).

Upon determining at Operation S812 that the robot cleaner has not contacted the obstacle (S812, No), the robot cleaner 1 may continue to perform contour travel along the border of the predefined cleaning region (S816).

Upon determining at Operation S812 that the robot cleaner has contacted the obstacle (S812, Yes), the robot cleaner 1 may move along the obstacle. When the robot cleaner 1 rotates during movement along the obstacle, the robot cleaner 1 may determine whether the rotation angle of the robot cleaner 1 is less than a reference angle (S813). Information regarding the reference angle may be pre-stored in the storage 170.
Upon determining at Operation S813 that the rotation angle of the robot cleaner 1 is equal to or greater than the reference angle (S813, No), the robot cleaner 1 may continue to perform contour travel along the contacted obstacle (S818).
Upon determining at Operation S813 that the rotation angle of the robot cleaner 1 is less than the reference angle (S813, Yes), the robot cleaner 1 may determine whether the travel distance of the robot cleaner 1 after rotation is greater than a reference distance (S814). Information regarding the reference distance may be pre-stored in the storage 170.

Upon determining that the travel distance of the robot cleaner 1 is equal to or less than the reference distance (S814, No), the robot cleaner 1 may continue to perform contour travel along the contacted obstacle (S818).

On the other hand, upon determining that the travel distance of the robot cleaner 1 is greater than the reference distance (S814, Yes), the robot cleaner 1 may recognize the obstacle as a reference wall (S815). For example, when the rotation angle of the robot cleaner 1 is changed during movement of the robot cleaner 1 from the point A to the point B in FIG. 8, if the changed rotation angle is less than the reference angle and the distance between the point A and the point B is greater than the reference distance, the robot cleaner 1 may recognize a segment AB interconnecting the point A and the point B as the reference wall.

When the reference wall is detected as described above, the robot cleaner 1 may redefine the cleaning region, in which the robot cleaner 1 is located, and cleaning direction based on the reference wall (S817). For example, the robot cleaner 1 may redefine the second cleaning region R2 based on the segment AB in FIG. 8. At this time, as shown in FIG. 9, the robot cleaner 1 may enlarge the rotated region to a predetermined level, and redefine the enlarged region R2' as a second cleaning region. This is carried out to prevent a specific portion from being omitted from the cleaning region due to redefinition of the second cleaning region R2.

Meanwhile, when a plurality of reference walls is detected as the result of contour travel, the robot cleaner 1 may select the longest one of the reference walls, and redefine the cleaning region based on the selected reference wall.

FIG. 15 is a flowchart showing an operation of cleaning the cleaning region with respect to which the virtual wall is set according to one or more embodiments, in more detail. The robot cleaner 1 may perform cleaning while traveling along the travel axis (S831). Subsequently, the robot cleaner 1 may determine whether an obstacle has been sensed during cleaning (S832).

Upon determining that the obstacle has been sensed during cleaning along the travel axis (S832, Yes), the robot cleaner 1 may change a travel path with reference to a wall following method (S839). For example, as shown in FIG. 11, the robot cleaner 1 may travel while evading the obstacle according to the wall following method.

Upon determining that the obstacle has not been sensed during cleaning along the travel axis (S832, No), the robot cleaner 1 may determine whether there is a region to be cleaned in the travel-axis direction (S833).

Upon determining at Operation S833 that there is a region to be cleaned in the travel-axis direction (S833, Yes), the robot cleaner 1 may maintain the present travel direction (S837).

Upon determining at Operation S833 that there is not a region to be cleaned in the travel-axis direction (S833, No), i.e. that cleaning of regions in the travel-axis direction has been completed, the robot cleaner 1 may perform curved travel to change the travel direction to the travel axis along which there is a region to be cleaned (S834). At this time, the robot cleaner 1 may perform curved travel to change the travel direction by 180 degrees.

As is apparent from the above description, in a robot cleaner and a control method thereof according to an aspect of one or more embodiments, when a repetition mode is executed, a plurality of cleaning regions may be defined based on the position of the robot cleaner, and cleaning of the cleaning regions may be sequentially performed, the cleaning region, in which the robot cleaner is located, may be redefined depending upon whether a reference wall is detected, and the robot cleaner may perform cleaning while moving along a travel path in the redefined cleaning region, thereby possibly reducing regions in which cleaning is not performed or regions in which cleaning is repeated.

Also, because regions in which cleaning is not performed or regions in which cleaning is repeated may be reduced, cleaning efficiency of the robot cleaner may be improved.
In one or more embodiments, any apparatus, system, element, or interpretable unit descriptions herein include one or more hardware devices or hardware processing elements. For example, in one or more embodiments, any described apparatus, system, element, retriever, pre or post-processing elements, tracker, detector, encoder, decoder, etc., may further include one or more memories and/or processing elements, and any hardware input/output transmission devices, or represent operating portions/aspects of one or more respective processing elements or devices. Further, the term apparatus should be considered synonymous with elements of a physical system, not limited to a single device or enclosure or all described elements embodied in single respective enclosures in all embodiments, but rather, depending on embodiment, is open to being embodied together or separately in differing enclosures and/or locations through differing hardware elements.

In addition to the above described embodiments, embodiments can also be implemented through computer readable code/instructions in/on a non-transitory medium, e.g., a computer readable medium, to control at least one processing device, such as a processor or computer, to implement any above described embodiment. The medium can correspond to any defined, measurable, and tangible structure permitting the storing and/or transmission of the computer readable code.

The media may also include, e.g., in combination with the computer readable code, data files, data structures, and the like. One or more embodiments of computer-readable media include: magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Computer readable code may include both machine code, such as produced by a compiler, and files containing higher level code that may be executed by the computer using an interpreter, for example. The media may also be any defined, measurable, and tangible distributed network, so that the computer readable code is stored and executed in a distributed fashion. Still further, as only an example, the processing element could include a processor or a computer processor, and processing elements may be distributed and/or included in a single device.

The computer-readable media may also be embodied in at least one application specific integrated circuit (ASIC) or Field Programmable Gate Array (FPGA), as only examples, which execute (e.g., processes like a processor) program instructions.

While aspects of the present invention has been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

Thus, although a few embodiments have been shown and described, with additional embodiments being equally available, it would be appreciated by those skilled in the art that changes may be made in these embodiments without departing from the principles of the invention, the scope of which is defined in the claims and their equivalents.

## Claims

1. A control method of a robot cleaner comprising:
defining a plurality of cleaning regions based on a position of the robot cleaner according to a first cleaning mode; and
sequentially cleaning the defined cleaning regions, charaterized in that the sequential cleaning of the defined cleaning regions comprises:
performing contour travel along a contour of the cleaning region in which the robot cleaner is located to detect a reference wall;
redefining the cleaning region in which the robot cleaner is located and setting a cleaning direction based on the detected reference wall; and
cleaning the redefined cleaning region while traveling along a predetermined travel path, and
wherein the redefined cleaning region comprises a region obtained by rotating the cleaning region in which the robot cleaner is located based on the detected reference wall or a region obtained by rotating the cleaning region in which the robot cleaner is located based on the detected reference wall and enlarging the rotated cleaning region to a predetermined level.

2. The control method according to claim 1, wherein the first cleaning mode comprises a repetition mode to repeat the sequential cleaning of the defined cleaning regions.

3. The control method according to claim 1 or 2, wherein the detection of the reference wall comprises detecting the obstacle as the reference wall when a rotation angle of the robot cleaner rotated by an obstacle during the contour travel is less than a reference angle, and a travel distance of the robot cleaner after rotation by the rotation angle is greater than a reference distance.

4. The control method according to any of claims 1 to 3, wherein the redefinition of the cleaning region in which the robot cleaner is located and setting the cleaning direction based on the detected reference wall comprises:
selecting a longest reference wall among a plurality of reference walls detected as a result of the contour travel; and
redefining the cleaning region in which the robot cleaner is located and setting the cleaning direction based on the selected reference wall.

5. The control method according to any one of claims 1 to 4, further comprising:
determining whether all of the cleaning regions have been cleaned after the sequential cleaning of the defined cleaning regions; and
upon determining that all of the cleaning regions have been cleaned, changing a cleaning start direction in the defined cleaning regions and performing sequential cleaning of the defined cleaning regions, the change of the cleaning start direction and the sequential cleaning of the defined cleaning regions being repeated.

6. A robot cleaner (1) comprising:
a controller (160) configured to define a plurality of cleaning regions (R1-R4) based on a position of the robot cleaner (1) and to control the robot cleaner (1) to sequentially clean the defined cleaning regions (R1-R4) according to a first cleaning mode, charaterized in that the controller (160) is arranged to control the robot cleaner (1) to perform contour travel along a contour of the cleaning region in which the robot cleaner is located to detect a reference wall, to redefine the cleaning region in which the robot cleaner (1) is located and set a cleaning direction based on the detected reference wall, and to control the robot cleaner (1) to clean the redefined cleaning region while traveling along a predetermined travel path, and
wherein the redefined cleaning region comprises a region obtained by rotating the cleaning region in which the robot cleaner is located based on the detected reference wall or a region obtained by rotating the cleaning region in which the robot cleaner (1) is located based on the detected reference wall, the rotated cleaning region being enlarged to a predetermined level.

7. The robot cleaner according to claim 6, wherein the first cleaning mode comprises a repetition mode to repeat the sequential cleaning of the defined cleaning regions.

8. The robot cleaner according to claim 6 or 7, wherein the controller is arranged to detect the obstacle as the reference wall when a rotation angle of the robot cleaner rotated by an obstacle during the contour travel is less than a reference angle, and a travel distance of the robot cleaner after rotation by the rotation angle is greater than a reference distance.

9. The robot cleaner according to any of claims 6 to 8, wherein, when a plurality of reference walls is detected as a result of the contour travel, the controller is arranged to select the longest reference wall among the plurality of reference walls and to redefine the cleaning region in which the robot cleaner is located and set the cleaning direction based on the selected reference wall.

10. The robot cleaner according to any one of claims 6 to 9, wherein the controller is arranged to control the robot cleaner to sequentially move to the cleaning regions along a zigzag travel path.

11. The robot cleaner according to any one of claims 6 to 10, wherein the controller is arranged to determine whether all of the cleaning regions have been cleaned after the sequential cleaning of the defined cleaning regions and, upon determining that all of the cleaning regions have been cleaned, to change a cleaning start direction in the defined cleaning regions and to control the robot cleaner to perform sequential cleaning of the defined cleaning regions, the change of the cleaning start direction and the sequential cleaning of the defined cleaning regions being repeated.

## Patentansprüche

1. Steuerungsverfahren für einen Reinigungsroboter, das Folgendes beinhaltet:
Definieren einer Vielzahl von Reinigungsbereichen basierend auf einer Position des Reinigungsroboters gemäß einem ersten Reinigungsmodus; und
sequenzielles Reinigen der definierten Reinigungsbereiche, **dadurch gekennzeichnet, dass** das sequenzielle Reinigen der definierten Reinigungsbereiche Folgendes beinhaltet:
Durchführen einer Konturfahrt entlang einer Kontur des Reinigungsbereichs, in dem sich der Reinigungsroboter befindet, um eine Bezugswand zu detektieren;
Umdefinieren des Reinigungsbereichs, in dem sich der Reinigungsroboter befindet, und Einstellen einer Reinigungsrichtung basierend auf der detektierten Bezugswand; und
Reinigen des umdefinierten Reinigungsbereichs während des Verfahrens entlang eines vorbestimmten Fahrwegs, und wobei der umdefinierte Reinigungsbereich einen Bereich, der durch Rotieren des Reinigungsbereichs, in dem sich der Reinigungsroboter befindet, basierend auf der detektierten Bezugswand erhalten wird, oder einen Bereich, der durch Rotieren des Reinigungsbereichs, in dem sich der Reinigungsroboter befindet, basierend auf der detektierten Bezugswand und durch Vergrößern des rotierten Reinigungsbereichs auf ein vorbestimmtes Niveau erhalten wird, beinhaltet.

2. Steuerungsverfahren gemäß Anspruch 1, wobei der erste Reinigungsmodus einen Wiederholungsmodus beinhaltet, um das sequenzielle Reinigen der definierten Reinigungsbereiche zu wiederholen.

3. Steuerungsverfahren gemäß Anspruch 1 oder 2, wobei die Detektion der Bezugswand das Detektieren des Hindernisses als die Bezugswand, wenn ein Rotationswinkel des Reinigungsroboters, rotiert um ein Hindernis während der Konturfahrt, kleiner als ein Bezugswinkel ist und eine Fahrstrecke des Reinigungsroboters nach Rotation um den Rotationswinkel größer als eine Bezugsstrecke ist, beinhaltet.

4. Steuerungsverfahren gemäß einem der Ansprüche 1 bis 3, wobei die Umdefinierung des Reinigungsbereichs, in dem sich der Reinigungsroboter befindet, und das Einstellen der Reinigungsrichtung basierend auf der detektierten Bezugswand Folgendes beinhaltet:
Auswählen einer längsten Bezugswand von einer Vielzahl von Bezugswänden, die als Resultat der Konturfahrt detektiert werden; und
Umdefinieren des Reinigungsbereichs, in dem sich der Reinigungsroboter befindet, und Einstellen der Reinigungsrichtung basierend auf der ausgewählten Bezugswand.

5. Steuerungsverfahren gemäß einem der Ansprüche 1 bis 4, das ferner Folgendes beinhaltet: Bestimmen, ob alle der Reinigungsbereiche gereinigt worden sind, nach dem sequenzielle Reinigen der definierten Reinigungsbereiche; und
nach dem Bestimmen, dass alle der Reinigungsbereiche gereinigt worden sind, Ändern einer Reinigungsstartrichtung in den definierten Reinigungsbereichen
und Durchführen des sequenziellen Reinigen der definierten Reinigungsbereiche, wobei die Änderung der Reinigungsstartrichtung und das sequenzielle Reinigen der definierten Reinigungsbereiche wiederholt werden.

6. Reinigungsroboter (1), der Folgendes beinhaltet:
eine Steuereinheit (160), die konfiguriert ist, um eine Vielzahl von Reinigungsbereichen (R1-R4) basierend auf einer Position des Reinigungsroboters (1) zu definieren und den Reinigungsroboter (1) zu steuern, um die definierten Reinigungsbereiche (R1-R4) gemäß einem ersten Reinigungsmodus sequenziell zu reinigen, **dadurch gekennzeichnet, dass** die Steuereinheit (160) eingerichtet ist, um den Reinigungsroboter (1) zu steuern, um eine Konturfahrt entlang einer Kontur des Reinigungsbereichs, in dem sich der Reinigungsroboter befindet, durchzuführen, um eine Bezugswand zu detektieren, um den Reinigungsbereich, in dem sich der Reinigungsroboter (1) befindet, umzudefinieren, und eine Reinigungsrichtung basierend auf der detektierten Bezugswand einzustellen, und um den Reinigungsroboter (1) zu steuern, um den umdefinierten Reinigungsbereich während des Fahrens entlang eines vorbestimmten Fahrwegs zu reinigen, und
wobei der umdefinierte Reinigungsbereich einen Bereich, der durch Rotieren des Reinigungsbereichs, in dem sich der Reinigungsroboter befindet, basierend auf der detektierten Bezugswand erhalten wird, oder einen Bereich, der durch Rotieren des Reinigungsbereichs, in dem sich der Reinigungsroboter (1) befindet, basierend auf der detektierten Bezugswand, wobei der rotierte Reinigungsbereich auf ein vorbestimmtes Niveau vergrößert wird, erhalten wird, beinhaltet.

7. Reinigungsroboter gemäß Anspruch 6, wobei der erste Reinigungsmodus einen Wiederholungsmodus beinhaltet, um das sequenzielle Reinigen der definierten Reinigungsbereiche zu wiederholen.

8. Reinigungsroboter gemäß Anspruch 6 oder 7, wobei die Steuereinheit eingerichtet ist, um das Hindernis als die Bezugswand zu detektieren, wenn ein Rotationswinkel des Reinigungsroboters, rotiert um ein Hindernis während der Konturfahrt, kleiner als ein Bezugswinkel ist und eine Fahrstrecke des Reinigungsroboters nach Rotation um den Rotationswinkel größer als eine Bezugsstrecke ist.

9. Reinigungsroboter gemäß einem der Ansprüche 6 bis 8, wobei, wenn eine Vielzahl von Bezugswänden als Resultat der Konturfahrt detektiert werden, die Steuereinheit eingerichtet ist, um die längste Bezugswand von der Vielzahl von Bezugswänden auszuwählen und den Reinigungsbereich, in dem sich der Reinigungsroboter befindet, umzudefinieren und die Reinigungsrichtung basierend auf der ausgewählten Bezugswand einzustellen.

10. Reinigungsroboter gemäß einem der Ansprüche 6 bis 9, wobei die Steuereinheit eingerichtet ist, um den Reinigungsroboter zu steuern, um sich sequenziell zu den Reinigungsbereichen entlang eines Zickzack-Fahrwegs zu bewegen.

11. Reinigungsroboter gemäß einem der Ansprüche 6 bis 10, wobei die Steuereinheit eingerichtet ist, um zu bestimmen, ob alle der Reinigungsbereiche gereinigt worden sind, nach dem sequenzielle Reinigen der definierten Reinigungsbereiche, und, nach dem Bestimmen, dass alle der Reinigungsbereiche gereinigt worden sind, eine Reinigungsstartrichtung in den definierten Reinigungsbereichen zu ändern und den Reinigungsroboter zu steuern, um das sequenzielle Reinigen der definierten Reinigungsbereiche durchzuführen, wobei die Änderung der Reinigungsstartrichtung und das sequenzielle Reinigen der definierten Reinigungsbereiche wiederholt werden.

## Revendications

1. Procédé de commande d'un robot nettoyeur comprenant les opérations consistant à :
définir une pluralité de régions de nettoyage sur la base d'une position du robot nettoyeur conformément à un premier mode de nettoyage ; et
nettoyer séquentiellement les régions de nettoyage définies, **caractérisé en ce que** le nettoyage séquentiel des régions de nettoyage définies comprend :
la réalisation d'un déplacement de contour le long d'un contour de la région de nettoyage dans laquelle le robot nettoyeur est localisé afin de détecter un mur de référence ;
la redéfinition de la région de nettoyage dans laquelle le robot nettoyeur est localisé et le réglage d'un sens de nettoyage sur la base du mur de référence détecté ; et
le nettoyage de la région de nettoyage redéfinie pendant le déplacement le long d'un trajet de déplacement prédéterminé, et
dans lequel la région de nettoyage redéfinie comprend une région obtenue par suite de la rotation de la région de nettoyage dans laquelle le robot nettoyeur est localisé sur la base du mur de référence détecté ou d'une région obtenue par suite de la rotation de la région de nettoyage dans laquelle le robot nettoyeur est localisé sur la base du mur de référence détecté et l'élargissement de la région de nettoyage tournée jusqu'à un niveau prédéterminé.

2. Procédé de commande selon la revendication 1, dans lequel le premier mode de nettoyage comprend un mode de répétition afin de répéter le nettoyage séquentiel des régions de nettoyage définies.

3. Procédé de commande selon la revendication 1 ou 2, dans lequel la détection du mur de référence comprend la détection de l'obstacle comme étant le mur de référence lorsqu'un angle de rotation du robot nettoyeur tourné par un obstacle durant le déplacement de contour est plus petit qu'un angle de référence, et qu'une distance de déplacement du robot nettoyeur après la rotation suivant l'angle de rotation est plus grande qu'une distance de référence.

4. Procédé de commande selon l'une quelconque des revendications 1 à 3, dans lequel la redéfinition de la région de nettoyage dans laquelle le robot nettoyeur est localisé et le réglage du sens de nettoyage sur la base du mur de référence détecté comprend les opérations consistant à :
sélectionner le mur de référence le plus long parmi une pluralité de murs de référence détectée en conséquence du déplacement de contour ; et
redéfinir la région de nettoyage dans laquelle le robot nettoyeur est localisé et régler le sens de nettoyage sur la base du mur de référence sélectionné.

5. Procédé de commande selon l'une quelconque des revendications 1 à 4, comprenant en outre les opérations consistant à :
déterminer si toutes les régions de nettoyage ont été nettoyées après le nettoyage séquentiel des régions de nettoyage définies ; et
une fois qu'il a été déterminé que toutes les régions de nettoyage ont été nettoyées, changer un sens de démarrage de nettoyage dans les régions de nettoyage définies et réaliser un nettoyage séquentiel des régions de nettoyage définies, le changement du sens de démarrage de nettoyage et le nettoyage séquentiel des régions de nettoyage définies étant répétés.

6. Robot nettoyeur (1) comprenant :
un dispositif de commande (160) configuré de façon à définir une pluralité de régions de nettoyage (R1-R4) sur la base d'une position du robot nettoyeur (1) et à commander le robot nettoyeur (1) pour nettoyer séquentiellement les régions de nettoyage définies (R1-R4) conformément à un premier mode de nettoyage, **caractérisé en ce que**
le dispositif de commande (160) est agencé de façon à commander le robot nettoyeur (1) pour réaliser un déplacement de contour le long d'un contour de la région de nettoyage dans laquelle le robot nettoyeur (1) est localisé afin de détecter un mur de référence, à redéfinir la région de nettoyage dans laquelle le robot nettoyeur (1) est localisé et régler un sens de nettoyage sur la base du mur de référence détecté, et à commander le robot nettoyeur (1) pour nettoyer la région de nettoyage redéfinie pendant le déplacement le long d'un trajet de déplacement prédéterminé, et
dans lequel la région de nettoyage redéfinie comprend une région obtenue par suite de la rotation de la région de nettoyage dans laquelle le robot nettoyeur est localisé sur la base du mur de référence détecté ou d'une région obtenue par suite de la rotation de la région de nettoyage dans laquelle le robot nettoyeur (1) est localisé sur la base du mur de référence détecté, la région de nettoyage tournée étant élargie jusqu'à un niveau prédéterminé.

7. Robot nettoyeur selon la revendication 6, dans lequel le premier mode de nettoyage comprend un mode de répétition afin de répéter le nettoyage séquentiel des régions de nettoyage définies.

8. Robot nettoyeur selon la revendication 6 ou 7, dans lequel le dispositif de commande est agencé de façon à détecter l'obstacle comme étant le mur de référence lorsqu'un angle de rotation du robot nettoyeur tourné par un obstacle durant le déplacement de contour est plus petit qu'un angle de référence, et qu'une distance de déplacement du robot nettoyeur après la rotation suivant l'angle de rotation est plus grande qu'une distance de référence.

9. Robot nettoyeur selon l'une quelconque des revendications 6 à 8, dans lequel, lorsqu'une pluralité de murs de référence est détectée en conséquence du déplacement de contour, le dispositif de commande est agencé de façon à sélectionner le mur de référence le plus long parmi la pluralité de murs de référence et à redéfinir la région de nettoyage dans laquelle le robot nettoyeur est localisé et régler le sens de nettoyage sur la base du mur de référence sélectionné.

10. Robot nettoyeur selon l'une quelconque des revendications 6 à 9, dans lequel le dispositif de commande est agencé de façon à commander le robot nettoyeur pour se rendre séquentiellement vers les régions de nettoyage le long d'un trajet de déplacement en zigzag.

11. Robot nettoyeur selon l'une quelconque des revendications 6 à 10, dans lequel le dispositif de commande est agencé de façon à déterminer si toutes les régions de nettoyage ont été nettoyées après le nettoyage séquentiel des régions de nettoyage définies et, une fois qu'il a été déterminé que toutes les régions de nettoyage ont été nettoyées, à changer un sens de démarrage de nettoyage dans les régions de nettoyage définies et à commander le robot nettoyeur pour réaliser un nettoyage séquentiel des régions de nettoyage définies, le changement du sens de démarrage de nettoyage et le nettoyage séquentiel des régions de nettoyage définies étant répétés.
